# EUROPEAN PATENT SPECIFICATION

(11) **EP 2 622 029 B1**
(45) Date of publication and mention of the grant of the patent: **12.08.2015**
(21) Application number: 10857671.1
(22) Date of filing: 28.09.2010
(51) Int. Cl.: C09D 9/04, C09D 9/00, D21C 5/02, D21C 9/00, D21C 9/08, B01F 17/00

(54) **DEINKING COMPOSITIONS AND METHODS OF USE**
DRUCKFARBENENTFERNUNGSZUSAMMENSETZUNGEN UND VERFAHREN ZU IHRER VERWENDUNG
COMPOSITIONS DE DÉSENCRAGE ET LEURS PROCÉDÉS D'UTILISATION

(43) Date of publication of application: 07.08.2013
(73) Proprietor: Dow Global Technologies LLC, Midland, MI 48674 (US)
(72) Inventor: WANG, Winkle Zhihui, Beijing 100029 (CN); MU, Jeff Jianhai, Shanghai 201102 (CN); GAO, Michael Peng, Beijing 100080 (CN)
(74) Representative: Beck Greener
(86) International application number: PCT/CN2010/077413
(87) International publication number: WO 2012/040908

(56) References cited:
- CN-A- 1 544 507
- US-A1- 2005 098 278
- US-B1- 6 369 010

## Description

### Field of the Invention

The invention relates to surfactant compositions and their use for deinking various substrates, such as waste paper. The compositions comprise an alkyldiphenyloxide disulfonate compound together with a nonionic surfactant.

### Background of the Invention

The deinking process, in which ink is deliberately removed from a substrate, is an important practice in various recycling industries, such as paper recycling. A widely used deinking technique is the so-called flotation process. In the flotation process, the substrate is immersed in a deinking composition and the ink is separated from the substrate and attached onto air bubbles. The air bubbles then rise to the surface and are removed.

Inks are usually oils or organic resins with hydrophobic surfaces. The deinking composition, therefore, is critical to removing such materials from a substrate. Consequently, surfactants suitable for use in deinking compositions generally need to exhibit a number of specific characteristics in order for the composition to be effective. For instance, surfactants should provide good penetration into the substrate (such as paper fibers), and have good compatibility with ink in order to better wet the ink and separate it from the substrate. In addition, surfactants should promote frothing or foaming in order to generate enough bubbles to which the freed ink particles can attach.

Many of the conventional surfactants, however, are unable to provide the foregoing requirements or are lacking in some other manner, and therefore generally do not adequately separate the ink from the substrate.

Fatty acid soap surfactants are widely used in deinking compositions, particularly in the paper recycling industry. The structure of fatty acid soap is usually R-COONa, in which R is a hydrocarbon chain with approximately 16-18 carbons. The hydrocarbon chain generally has good compatibility with inks and can readily adsorb on ink particles. The-COO- group can form insoluble salts with Ca²⁺ ions, and this change will collect inks together to form particles with proper size to get removed in the flotation process.

When used in low pH range, however, fatty acid soaps will change into fatty acid, and lose some or all of their surface activity. Consequently, fatty acid soaps are generally only effective under alkaline conditions. Alkaline conditions, however, result in waste water that has a high pH and a high chemical oxygen demand, conditions which increase the cost for treating the waste water.

The use of fatty acid soaps also requires the presence of Ca²⁺ ions to form insoluble salts that agglomerate the ink particles and therefore facilitate removal. However, insoluble salts also increase the risk of deposition and clogging of equipment and may cause other problems in the production process. Therefore, the hardness of the water needs to be controlled, adding to the complexity of the production process.

In the paper recycling industry, whiteness of paper is a major parameter to measure the performance of the deinking process. Conventional deinking compositions in the paper recycling industry, however, do not provide high whiteness of paper. As a result, the produced recycled paper may only be used in low end applications.

It would be an advance in the art if new deinking compositions could be identified that addresses one or more of the foregoing disadvantages. In the paper recycling industry, deinking compositions that could provide recycled paper with increased whiteness would also be particularly advantageous.

### BRIEF SUMMARY OF THE INVENTION

In one aspect, the invention provides a composition that is useful for deinking of a substrate. The composition comprises:
(a) an alkyldiphenyloxide disulfonate compound of formula I: 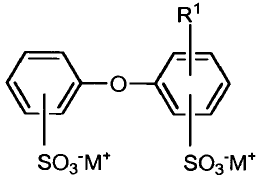 wherein M⁺ is H⁺ or a monovalent cation, and R¹ is C₁₂ alkyl or C₁₆ alkyl
(b) a nonionic surfactant of formula II: 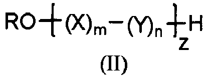 wherein X is ethylene oxide Y is propylene oxide, m is 4-30 and n is 12-30, z is an integer ranging from 1 to 50, and R is R^{A} or R^{A}-C(=O)- wherein R^{A} is C₆-C₂₀ alkyl or C₆-C₂₀ alkenyl.

In another aspect, the invention provides a method for deinking a substrate by contacting the substrate with a deinking composition as described herein.

### BRIEF DESCRIPTION OF THE FIGURES

Fig. 1 is a graph comparing the effectiveness of inventive and non-inventive compositions at paper whitening under low alkaline low concentration condition.
Fig. 2 is a graph comparing the effectiveness of inventive and non-inventive compositions at paper whitening under high alkaline high concentration condition.

### DETAILED DESCRIPTION OF THE INVENTION

As noted above, in one aspect, the invention provides a composition that is useful for the deinking of substrates. The composition of the invention provides a number of advantages over previously known systems. For instance, in some embodiments, the composition is active in both alkaline and neutral conditions, and so may be used in a wide pH range. As a consequence, waste treatment costs may be reduced when using the composition of the invention.

A further advantage is that the inventive composition does not require the presence of Ca²⁺ ions for effective deinking. Therefore, the composition is less likely to form undesirable deposits on equipment than conventional systems that require the used of Ca²⁺ ions (e.g., fatty acid systems as described above). The inventive composition provides foaming and therefore bubble formation so as to effectively remove dislodged inks away from the substrate during, e.g., a flotation deinking process. Moreover, because the composition contains a nonionic surfactant, wetting, substrate penetration, and ink dispersion, properties are favorable thus improving the efficiency of ink separation and reducing ink re-deposition.

In some embodiments, a synergism is observed between the composition's components when the composition is used for deinking of paper. The synergism results in improved whitening of the paper, thus permitting the reclaimed paper to be used in higher end application than may be possible with known systems.

The composition of the invention comprises:
(a) an alkyldiphenyloxide disulfonate compound of formula I: 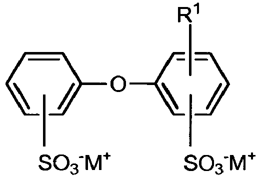 wherein M⁺ is H⁺ or a monovalent cation, and R¹ is C₁₂ alkyl or C₁₆ alkyl
(b) a nonionic surfactant of formula II: 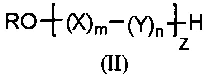 wherein X is ethylene oxide Y is propylene oxide, m is 4-30 and n is 12-30, z is an integer ranging from 1 to 50, and R is R^{A} or R^{A}-C(=O)- wherein R^{A} is C₆-C₂₀ alkyl or C₆-C₂₀ alkenyl.

Preferred compounds of formula I and I-1 include compounds of formula I-2, which are compounds of formula I or I-1 wherein M+ is H⁺, Na⁺, K⁺, ammonium or alkylated ammonium.

Preferred compounds of formula I, I-1, I-2, and I-3 include compounds of formula I-4, which are compounds of formula I, I-1, I-2, or I-3 wherein R¹ at each occurrence is independently C₁₂ alkyl, preferably branched C₁₂ alkyl.

Preferred compounds of formula I, I-1, I-2, and I-3 include compounds of formula I-5, which are compounds of formula I, I-1, I-2, or I-3 wherein R¹ at each occurrence is independently C₁₆ alkyl.

In a particularly preferred compound of formula I, R¹ is branched C₁₂ alkyl.

In a further particularly preferred compound of formula I, R¹ is C₁₆ alkyl.

Preferred compounds of formula II, II-1, and II-2 include compounds of formula II-3, which are compounds of formula II, II-1, or II-2 wherein R is R^{A}, and R^{A} C₆-C₁₈ alkyl, more preferably C₁₀-C₁₆ alkyl.

Preferred compounds of formula II, II-1, and II-2 include compounds of formula II-4, which are compounds of formula II, II-1, or II-2 wherein R is R^{A}-C(=O)- and R^{A} is C₆-C₁₈ alkyl or C₆-C₁₈ alkenyl, preferably C₆-C₁₈ alkyl, more preferably C₁₀-C₁₆ alkyl.

Preferred compounds of formula II, II-1, II-2, II-3, II-4, II-5, II-6, II-7, and II-8 include compounds of formula II-9, which are compounds of formula II, II-1, II-2, II-3, II-4, II-5, II-6, II-7, or II-8 wherein z is 1-30, alternatively 1-20, or alternatively 1-10. In some embodiments, z is 1. In some embodiments, z is 50.

In a particularly preferred compound of formula II, R^{A} is C₆-C₂₀ alkyl.

It should be noted that one of X and Y is ethylene oxide and the other is propylene oxide (and m and n are both non-zero integers), and the X and Y groups may be present in random, block, or combinations thereof order. By way of example, X and Y together may be random, for instance EO-EO-PO-EO-PO-PO-EO-, or X and Y may be blocks, for instance (EO-EO-EO...-EO)-(PO-PO-PO...-PO), or a combination with some part random and some part block. Order of addition of monomers, time of addition of monomers, and use of single or mixed monomer feeds will impact randomness and blockiness of the structure.

In some embodiments, the composition of the invention is substantially free of free fatty acids and their salts. By "substantially free" is meant that the composition contains 10 weight percent or less, alternatively 5 weight percent or less, or alternatively 2 weight percent or less of a free fatty acid or its salt.

Compounds of the formula I and II are commercially available or may be readily prepared by a person of ordinary skill in the art using literature syntheses.

The compositions of the invention are useful for the deinking of various substrates from which ink removal is desirable. Examples include paper, fabrics, plastics, and cardboard. A preferred substrate is paper.

In some embodiments, a typical composition according to the invention may contain at least about 20 weight percent, alternatively at least about 30 weight percent, alternatively at least about 40 weight percent, alternatively at least about 50 weight percent, alternatively at least about 60 weight percent, or alternatively at least about 70 weight percent of the compound of formula I. In some embodiments, the compositions contains no more than about 95 weight percent, alternatively no more than about 85 weight percent of the formula I compound.

In some embodiments, the composition may contain at least about 5 weight percent, alternatively at least about 10 weight percent, alternatively at least about 20 weight percent, alternatively at least about 30 weight percent, alternatively at least about 40 weight percent, of the compound of formula II. In some embodiments, the compositions contains no more than about 60 weight percent, alternatively no more than about 50 weight percent of the formula II compound. The foregoing amounts are by weight based on the total weight of the composition.

In some embodiments, the weight ratio of the formula I compound to the formula II compound in the composition is between about 30:70 and 80:20. Alternatively, the weight ratio is about 75:25. Alternatively, the weight ratio is about 70:30.

The composition may contain other materials as optional additives. Examples of such optional additives include additional surfactants, such as additional compounds of formula I or II, diluents, such as water, or solvents like alcohols, glycol ethers, etc.

As noted above, the compositions of the invention are useful for the deinking of substrates. The compositions may be used in any process that relies on the use of the surfactants for ink removal, including for instance, flotation processes, washing processes, and other processes. A preferred process is flotation.

In an illustration of a typical deinking flotation process, the substrate, paper as an example, is mixed with water and other additives, and converted into a pulp by mechanical effect. The non paper based debris is removed by a screening process. Then the pulp enters the deinking process, where inks are removed by a washing process, or a flotation process. There might be one or two stages of washing or flotation process, or a combination of two processes in a multiple stages way. After ink removal, the pulp will enter the following processes, such as concentrating, bleaching, etc., for further use.

The deinking composition can be dosed into the pulp at various stages, such as before or during the pulping process, with for example a dosage between 0.01wt% and 1wt% based on the dry paper weight, or preferred range from 0.02wt% to 0.5wt%, or further preferred range from 0.2wt% to 0.5wt%. The deinking composition can also be dosed into the pulp at any points before each stage of the ink removal process, such as before first flotation or second flotation process, or before first washing or second washing process, etc.

The deinking composition should be evenly mixed with the pulp to obtain a good performance. The operation temperature range in a typical process is about 25 °C to about 70 °C. A preferred temperature range is typically about 35 °C to about 60 °C, and a further preferred temperature range is about 45 °C to about 55 °C.

The term "alkyl" as used in this specification encompasses straight and branched chain aliphatic groups having the indicated number of carbon atoms. "Alkenyl" means an unsaturated straight or branched chain aliphatic group having the indicated number of carbon atoms and containing one or more carbon-carbon double bonds.

The following examples are illustrative of the invention but are not intended to limit its scope. Unless otherwise indicated, the ratios, percentages, parts, and the like used herein are by weight.

### EXAMPLES

The examples compare the effectiveness of compositions of the invention to non-inventive compositions in a deinking process. The materials used in the inventive and non-inventive compositions are shown in Table 1.

**Table 1**

| | Structure | Comments |
|---|---|---|
| Component 1 | 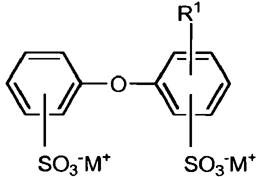 | 35wt% aqueous solution |
| | | R¹ = C₁₆ alkyl |
| | | M=Na |
| Component 2 | R-COO-(EO)₂₅-(PO)₂₀.₅-H | Fatty acid initiated |
| | | EO/PO copolymer. R approx C16∼20, (>90% unsaturated) |
| Component 3 | 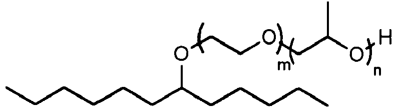 | Secondary fatty alcohol initiated |
| | | EO/PO copolymer. m = 6, n = 14 |
| Component 4 | | Secondary fatty alcohol initiated |
| | | EO/PO copolymer. m = 10, n = 22.5 |
| Component 5 | 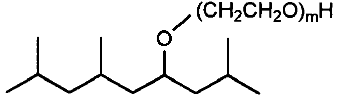 | 90% aqueous solution m=8 |
| Component 6 | C_{6∼16}-O-(PO)ₘ-(EO)ₙ-H | Fatty alcohol initiated |
| | | EO/PO copolymer. m = about 2.5, n 8∼10 |
| Component 7 | C_{10∼16}-O-(EO)ₘ-H | Fatty alcohol ethoxylate. m=9 |
| Component 8 | Commercially available deinking product | |

The tested inventive compositions are shown in Table 2.

**Table 2**

| Composition | Inventive example A (wt %) | Inventive example B (wt %) |
|---|---|---|
| Component 1 | 74.10% | 61.63% |
| Component 2 | 25.90% | |
| Component 3 | | 11.20% |
| Component 4 | | 2.77% |
| Component 5 | | 2.34% |
| Component 6 | | 5.40% |
| Component 7 | | 16.66% |

The tested non-inventive compositions are as follows:
Comparative example 1: 100 % Component 2
Comparative example 2: 50 % Component 2 plus 50% Sodium Oleate
Comparative example 3: Component 8, commercial product with 40% solid content.

### Example 1

### Deinking test: Low alkaline, low dosage condition

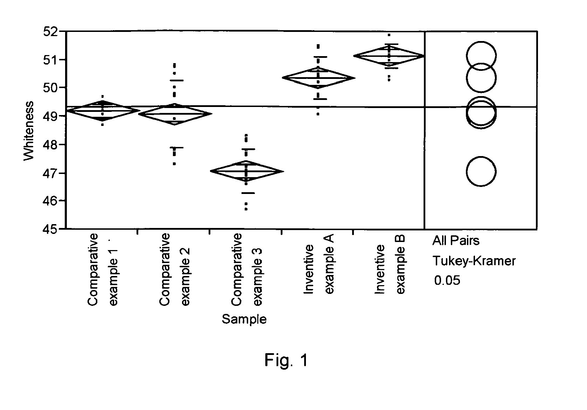

a) Weigh 385g dry waste newspaper (from US), and soak into 3.85L 50°C water. Add 1.925g NaOH, 3.85g Na2SiO₃•9H₂O, 1.925g EDTA, 5.775g H₂O₂ (30%) and 0.77g (solid content) deinking composition. This mixture is pulped for 15min using an N-196VT pulper from Adirondack Machine Corp.
b) 3.85L water is added into the pulp for dilution. The diluted pulp is aged in the pulper under 50°C for 20min.
c) The pulp is transferred into an L-100 flotation tank from Adirondack Machine Corp, and diluted with 50°C water into 38.5L. 10g CaCl₂ is added into the pulp and mixed into uniform. Flotation is carried out for 10min.
d) After flotation, 600ml pulp is collected and made into 3 piece of paper. The paper whiteness is tested using a DN-B whiteness tester. For each paper, 3 measures are done on both sides and the average is recorded. Fig. 1 shows test results under low alkaline low concentration condition (alkaline dosage 0.5%, deinking composition dosage 0.2% based on waste paper).

### Example 2

### Deinking test: High alkaline, high dosage condition

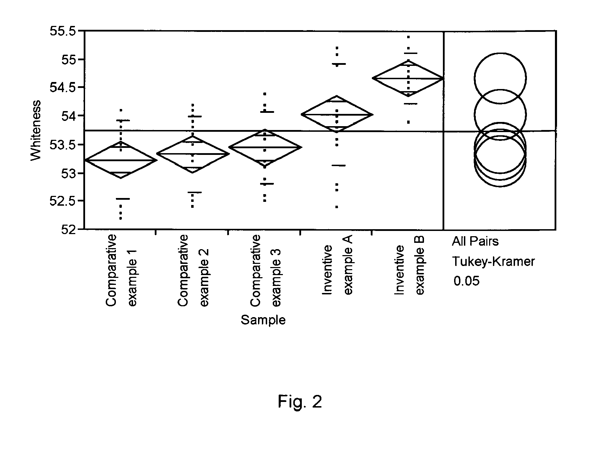

a) Weigh 385g dry waste newspaper (from US), and soak into 3.85L 50°C water. Add 5.775g NaOH, 11.55g Na₂SiO₃•9H₂O, 3.85g EDTA, 12.83g H₂O₂ (30%) and 1.925g (solid content) deinking composition. This mixture is pulped for 15min using an N-196VT pulper from Adirondack Machine Corp.
b) 3.85L water is added into the pulp for dilution. The diluted pulp is aged in the pulper under 50°C for 20min.
c) The pulp is transferred into an L-100 flotation tank from Adirondack Machine Corp, and diluted with 50°C water into 38.5L. 10g CaCl₂ is added into the pulp and mixed into uniform. Flotation is carried out for 10min.
d) After flotation, 600ml pulp is collected and made into 3 piece of paper. The paper whiteness is tested using a DN-B whiteness tester. For each paper, 3 measures are done on both sides and the average is recorded. Fig. 2 summarizes the test results under high alkaline high concentration condition (alkaline dosage 1.5%, deinking agent dosage 0.5% based on waste paper).

Examples 1 and 2 demonstrate that inventive examples A and B exhibit better performance in paper whitening than comparative examples under both high alkaline and low alkaline conditions.

While the invention has been described above according to its preferred embodiments, it can be modified within the spirit and scope of this disclosure. This application is therefore intended to cover any variations, uses, or adaptations of the invention using the general principles disclosed herein. Further, the application is intended to cover such departures from the present disclosure as come within the known or customary practice in the art to which this invention pertains and which fall within the limits of the following claims.

## Claims

1. A composition comprising:
(a) an alkyldiphenyloxide disulfonate compound of formula I: 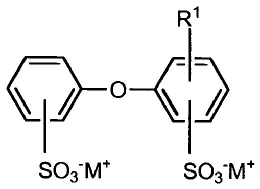 wherein M⁺ is H⁺ or a monovalent cation, and R¹ is C₁₂ alkyl or C₁₆ alkyl
(b) a nonionic surfactant of formula II: 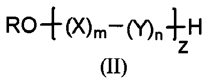 wherein X is ethylene oxide Y is propylene oxide, m is 4-30 and n is 12-30, z is an integer ranging from 1 to 50, and R is R^{A} or R^{A}-C(=O)- wherein R^{A} is C₆-C₂₀ alkyl or C₆-C₂₀ alkenyl

2. A composition according to claim 1 that is substantially free of free fatty acids.

3. A method for deinking a substrate, the method comprising applying to the substrate a composition according to claim 1 or claim 2.

4. A method according to claim 3 wherein the substrate is paper, fabric, plastic, or cardboard.

## Patentansprüche

1. Eine Zusammensetzung, die Folgendes beinhaltet:
(a) eine Alkyldiphenyloxiddisulfonatverbindung der Formel I: 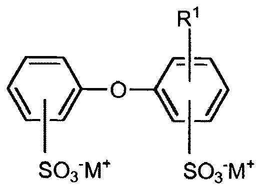 wobei M⁺ H⁺ oder ein monovalentes Kation ist und R¹ C₁₂-Alkyl oder C₁₆-Alkyl ist,
(b) ein nichtionisches Tensid der Formel II: 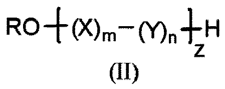 wobei X Ethylenoxid ist, Y Propylenoxid ist, m 4-30 ist und n 12-30 ist, z eine ganze Zahl im Bereich von 1 bis 50 ist und R R^{A} oder R^{A}-C(=O)- ist, wobei R^{A} C₆-C₂₀-Alkyl oder C₆-C₂₀-Alkenyl ist.

2. Zusammensetzung gemäß Anspruch 1, die im Wesentlichen frei von freien Fettsäuren ist.

3. Ein Verfahren zum Deinking eines Substrats, wobei das Verfahren das Aufbringen einer Zusammensetzung gemäß Anspruch 1 oder Anspruch 2 auf das Substrat beinhaltet.

4. Verfahren gemäß Anspruch 3, wobei das Substrat Papier, Stoff, Kunststoff oder Karton ist.

## Revendications

1. Une composition comprenant :
(a) un composé de disulfonate d'alkyldiphényloxyde de formule I : 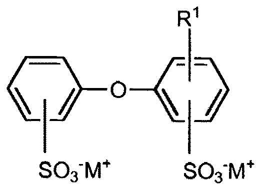 dans lequel M⁺ est H⁺ ou un cation monovalent, et R¹ est l'alkyle en C₁₂ ou l'alkyle en C₁₆
(b) un tensioactif non ionique de formule II : 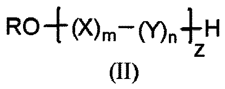 dans lequel X est un oxyde d'éthylène, Y est un oxyde de propylène, m vaut de 4 à 30 et n vaut de 12 à 30, z est un nombre entier dans la gamme comprise entre 1 et 50, et R est R^{A} ou R^{A}-C(=O)- dans lequel R^{A} est un alkyle en C₆ à C₂₀ ou un alcényle en C₆ à C₂₀.

2. Une composition selon la revendication 1 qui est sensiblement dépourvue d'acides gras libres.

3. Une méthode pour désencrer un substrat, la méthode comprenant l'application sur le substrat d'une composition selon la revendication 1 ou la revendication 2.

4. Une méthode selon la revendication 3 dans laquelle le substrat est du papier, du tissu, du plastique, ou du carton.
